# EUROPEAN PATENT APPLICATION

(11) **EP 3 693 577 A1**
(43) Date of publication of application: **12.08.2020**
(21) Application number: 18864776.2
(22) Date of filing: 03.10.2018
(51) Int. Cl.: F02C 7/236, F02C 9/26

(54) **METHOD OF OPERATING FUEL SYSTEM OF GAS TURBINE ENGINE**

(30) Priority: 05.10.2017 RU 2017135495
(71) Applicant: Joint-Stock Company "United Engine Corporation" (JSC "EUC"), Moscow 105118 (RU)
(72) Inventor: ROSSIK, Mihail Viktorovich, Perm' 614083 (RU); SAVENKOV, Yurij Semenovich, Perm' 614068 (RU); LISOVIN, Igor Georgievich, Perm' 614097 (RU); RUKAVISHNIKOV, Vyacheslav Evgenievich, Perm' 614016 (RU)
(74) Representative: De Lorenzo, Danilo
(86) International application number: PCT/RU2018/000646
(87) International publication number: WO 2019/070160

(57) **Abstract**

The Invention is related to the method for the creation of the required pressure and fuel rate in the fuel system of the aircraft GTE.

Method for the creation of the required pressure and fuel rate in the fuel system of the gas turbine engine containing an electrically-driven fuel pump, a mechanically-driven fuel pump (from the gearbox), fuel metering/ distribution device, controller, transducers consisting in the supply of fuel into the combustion chamber at the GTE rotation speeds lower than 40% of the maximum rotation speed of the gas turbine engine rotor due to activation and operation of the electrically-driven fuel pump, when rotation speed of the mechanically-driven fuel pump is not sufficient to ensure the required fuel flow rate; at the GTE rotation speeds over 40% the required fuel flow rate is provided by the mechanically-driven fuel pump and by the electrically-driven fuel pump, at the operation modes of the electrically-driven fuel pump in the fuel system, except for the required flow rate to the combustion chamber, additionally the necessary fuel pressure and flow rate for the operation of hydraulic drive units and fuel distribution units are provided; after the end of the gas-turbine engine start and the GTE attaining the idle mode the electrically-driven pump is switched over to the standby independent mode at the reduced head, or switched off; the ground idle mode and all the engine operation modes with the rotation speeds of the GTE rotor and mechanically-driven fuel pump drive shaft exceeding the ground idle mode are ensured by operation of the for the supply of the required fuel flow rate into the GTE combustion chamber and creation of the required fuel pressure for the hydraulically-driven units, additionally at the GTE operation modes with the GTE rotor rotation speed over 40% and occurrence of the conditions with an insufficient fuel pressure at the inlet or outlet of the mechanically-driven fuel pump, as well as at the fuel temperature at the inlet of the mechanically-driven pump less than +10°C the rotor speed for the electrically-driven fuel pump is started and/or increased and the fuel pressure and temperature is maintained at the required level.

Therefore, the invention proposed enables elimination of the fuel flow rate and pressure limitations at lower rotation speed during the start of the gas turbine engine, reduction the extent of the fuel preheat from the fuel pump with the uncontrolled capacity of the mechanically-driven fuel pump at the main modes with the low fuel flow rate, increase of the engine failure safety on the "engine stall" functional failure, provision of the conditions for the attainment of the long-term service lives of the fuel pumps at the expense of the function distributions between different operation modes of the gas turbine engine and actuation duration, obtaining optimum weight and dimensional parameters of the fuel pumps.

## Description

The Invention is related to the method for the creation of the required pressure and fuel rate in the fuel system of the aircraft gas turbine engine (GTE).

The system of fuel supply of the gas turbine engine containing an electronic controller the input of which is connected to the transducers of the engine parameters and flight mode, high pressure electrical pump and metering device connected in series, is known. Disadvantages of this system for the large thrust GTE's are: excessive weight and dimensional characteristics of the electrical pump, dependence of the GTE reliability on the quality of the pump electrical drive electricity supply at the flight critical modes (take-off and landing), need of high power and high reliability of the power-supply sources and secondary power-supply converters of the pump electrical drive, difficulties in the provision of the sufficient reliability of the heavy-duty pump electrical drive in case of the GTE operation during long-term service life (Patent RU No. 2329387, IPC F02C9/26 published on July 20, 2008). Hereby, the most wide-spread fuel systems of the aircraft GTE's are equipped with a mechanically-driven fuel pump having significant advantages in terms of the weight and size and high verified reliability.

The closest to the Invention claimed is the method of the fuel system operation of the GTE auxiliary power unit containing an electrically-driven fuel pump, a mechanically-driven fuel pump from the gear box, fuel metering/ distribution device, controller, transducers consisting in the fact that the fuel is supplied to the GTE combustion chamber at the GTE rotation speed of 1-8% at the expense of the availability and operation of the electrically-driven fuel pump when the rotation speed of the mechanically-driven fuel pump is not sufficient to ensure the required fuel flow rate, when the GTE rotation speed is more than 8% the controller turns off the electrically-driven fuel pump, the fuel is supplied to the combustion chamber due to the operation of the mechanically-drive fuel pump (U.S. Patent No. 9206775, IPC B64D37/34, F02C7/236, F02M31/16, F02M37/00, published on December 08, 2015).

The disadvantage of the known fuel system of the GTE auxiliary power unit is the fact that with the efficient application of similar approaches to the design of the propulsion motor other combinations of the two fuel pumps' operation modes with the controlled (electrically-driven fuel pump) and uncontrolled capacity (mechanically-driven fuel pump) are necessary.

The technical problem to the solution of which the invention is aimed at consists in the efficient use of the advantages of the two fuel pumps with different drive types at the propulsion aircraft GTE, minimization of the disadvantages thereof and obtaining high specific and optimum parameters of the fuel pumps, in the exclusion of the constraints on the fuel flow rate and pressure in terms of the highpressure compressor rotation speed at the stage of the combustion chamber ignition during the GTE start, in the reduction of the fuel preheat from the fuel pump with the uncontrolled capacity (mechanical drive) at the main modes with the low fuel rate (in the area of the following modes: idle, flight idle, cruise flight), in the improvement of the engine failure safety on the "engine stall" functional failure, in the provision of the conditions for the attainment of the long-term service lives of the fuel pumps, in the obtaining of the optimum weight and dimensional parameters of the fuel pumps.

The technical problem is solved by means of the fact that in the method of the creation of fuel pressure and flow rate in the fuel system of the gas turbine engine, containing the electrically-driven fuel pump, the fuel pump with the mechanical drive from the gearbox, fuel metering/ distribution device, controller, transducers consisting in the fact that the fuel system and gas turbine engine operation is provided from the electrically-driven pump up to 40% of the maximum rotation speed of the gas turbine engine rotor, the rotation speed of the electrically-driven fuel pump is gradually reduced and/or the fuel bypass from the electrically-driven pump outlet to the fuel system inlet is opened; at the GTE rotation speeds over 40% the required fuel flow rate is provided by the mechanically-driven fuel pump and by the electrically-driven fuel pump, at the operation modes of the electrically-driven fuel pump in the fuel system, except for the required flow rate to the combustion chamber, additionally, the necessary fuel pressure and flow rate for the operation of hydraulic drive units and fuel distribution units are provided; after the end of the gas-turbine engine start and the GTE attaining the idle mode the electrically-driven pump is switched over to the standby independent mode at the reduced head, or switched off; the ground idle mode and all the engine operation modes with the rotation speeds of the GTE rotor and mechanically-driven fuel pump drive shaft exceeding the ground idle mode are ensured by operation of the mechanically-driven fuel pump for the supply of the required fuel flow rate into the GTE combustion chamber and creation of the required fuel pressure for the hydraulically-driven units, additionally at the GTE operation modes with the GTE rotor rotation speed over 40% and occurrence of the conditions with an insufficient fuel pressure at the inlet or outlet of the mechanically-driven fuel pump, as well as at the fuel temperature at the inlet of the mechanically-driven pump less than +10°C the rotor speed for the electrically-driven fuel pump is started and/or increased and the fuel pressure and temperature is maintained at the required level.

In the proposed invention the fuel system and gas turbine engine operation is ensured by means of the fuel supply from the electrically-driven pump up to 40% of the maximum rotation speed of the GTE, the electrically-driven fuel pump rotation speed is gradually reduced, and/or the fuel bypass from the outlet of the electrically-driven pump to the fuel system inlet is opened; at the GTE rotor rotation speed over 40% the required fuel flow rate is provided by the supply from the mechanically-driven fuel pump and electrically-driven fuel pump; at the operation stages of the electrically-driven fuel pump, apart from the required fuel supply to the combustion chamber additionally ensures the required fuel pressure and flow rate for the operation of hydraulically-driven units and fuel-distribution units; after the GTE start completion and the GTE reaching the idle mode the electrically-driven fuel pump is switched over to the standby independent mode with the reduced head or is switched off; the ground idle mode and all the engine operation modes with the rotation speeds of the GTE rotor and mechanically-driven fuel pump drive shaft exceeding the values for the ground idle mode is ensured by means of the mechanically-driven fuel pump operation to supply the required quantity of the fuel into the GTE combustion chamber and creation of the required fuel flow rate and pressure for the operation of hydraulically-driven units, additionally, at the GTE modes with the GTE rotor speed over 40% and occurrence of the conditions with insufficient fuel pressure and the inlet or outlet of the mechanically-driven fuel pump as well as at the fuel temperature at the inlet of the mechanically-driven pump less than +10°C the rotor speed is started and/or increased for the electrically-driven fuel pump and the fuel pressure or temperature is maintained at the required level which enables efficient use of the advantaged of the fuel pumps with different drives at the aircraft propulsion engine.

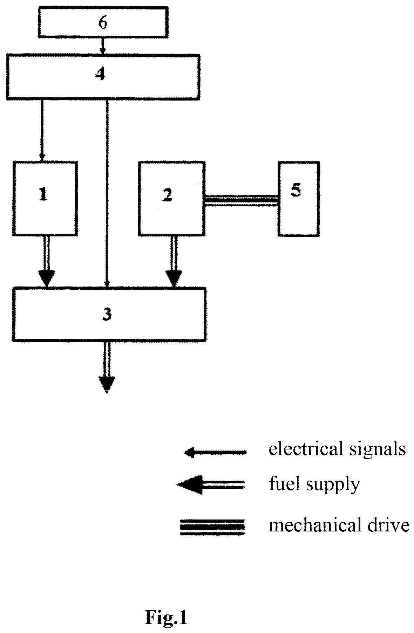

Fig.1 shows the diagram of the creation of the required pressure and fuel flow rate in the GTE fuel system.

The method for the creation of the required pressure and fuel rate in the GTE fuel system is implemented as follows. The electrically-driven fuel pump1 is used as the main pump at the initial period of the GTE (not shown) start, ensuring the processes of the fuel supply into the combustion chamber (not shown) and supply of the working fluid (fuel) for the operation of the hydraulically-driven units for the engine start.

The fuel pump 2 mechanically-driven from the gearbox 5 at the engine start initial period operates in the closed loop. The connection of the mechanically-driven fuel pump 2 to the processes of the fuel supply is smooth, as the pump rotation speed increases and the engine reaches the idle mode. Hereby, the utilized capacity of the electrically-driven fuel pump 1 reduces respectively.

The ground idle and all the engine modes with higher GTE rotor and mechanically-driven fuel pump drive shaft 2 rotation speed values are completely ensured by the operation of the mechanically-driven fuel pump 2 to supply the required fuel flow rate to the engine combustion chamber and creation of the required working fluid pressure for the operation of the hydraulically-driven units. Hereby, the electrically-driven fuel pump 1, depending on the engine demand, may either be off, or work in the closed loop at the reduced supply, or be connected to the fuel supply to the combustion chamber, or be used to maintain the required fuel pressure and temperature parameters in the special conditions.

The controller 4, using the measurement readings of the transducers 6, controls the connection and operation modes of the electrically-driven fuel pump 1 and fuel metering/ distribution device 3. The fuel metering/ distribution device 3 provides the fuel metering to the combustion chamber and fuel distribution in the fuel system.

Therefore, the implementation of the proposed invention with the features above enables elimination of the fuel flow rate and pressure based on the rotation speed during the start of the gas turbine engine, reduction the extent of the fuel preheat from the fuel pump with the uncontrolled capacity of the mechanically-driven fuel pump at the main modes with the low fuel flow rate, increase of the engine failure safety on the "engine stall" functional failure, provision of the conditions for the attainment of the long-term service lives of the fuel pumps at the expense of the function distributions between different operation modes of the gas turbine engine and actuation duration, obtaining optimum weight and dimensional parameters of the fuel pumps.

## Claims

1. Method for the creation of the required pressure and fuel rate in the fuel system of the gas turbine engine containing an electrically-driven fuel pump, a mechanically-driven fuel pump (from the gearbox), fuel metering/ distribution device, controller, transducers consisting in the fact that the fuel system and gas turbine engine operation is provided from the electrically-driven pump up to 40% of the maximum rotation speed of the gas turbine engine rotor, the rotation speed of the electrically-driven fuel pump is gradually reduced and/or the fuel bypass from the electrically-driven pump outlet to the fuel system inlet is opened; at the GTE rotation speeds over 40% the required fuel flow rate is provided by the mechanically-driven fuel pump and by the electrically-driven fuel pump, at the operation modes of the electrically-driven fuel pump in the fuel system, except for the required flow rate to the combustion chamber, additionally the necessary fuel pressure and flow rate for the operation of hydraulic drive units fuel distribution units are provided; after the end of the gas-turbine engine start and the GTE attaining the idle mode the electrically-driven pump is switched over to the standby independent mode at the reduced head, or switched off; the ground idle mode and all the engine operation modes with the rotation speeds of the GTE rotor and mechanically-driven fuel pump drive shaft exceeding the ground idle mode are ensured by operation of the mechanically-driven fuel pump for the supply of the required fuel flow rate into the GTE combustion chamber and creation of the required fuel pressure for the hydraulically-driven units, additionally at the GTE operation modes with the GTE rotor rotation speed over 40% and occurrence of the conditions with an insufficient fuel pressure at the inlet or outlet of the mechanically-driven fuel pump, as well as at the fuel temperature at the inlet of the mechanically-driven pump less than +10°C the rotor speed for the electrically-driven fuel pump is started and/or increased and the fuel pressure and temperature is maintained at the required level.
